(19) Europäisches Patentamt
European Patent Office
Office européen des brevets

(11) **EP 4 675 704 A2**

(12) **EUROPEAN PATENT APPLICATION**

(43) Date of publication:
**07.01.2026   Bulletin 2026/02**

(21) Application number: **25183759.7**

(22) Date of filing: **18.06.2025**

(51) International Patent Classification (IPC):
**H01M 4/485** (2010.01)          **H01M 4/66** (2006.01)
**H01M 10/052** (2010.01)

(52) Cooperative Patent Classification (CPC):
**H01M 4/66; H01M 4/667;** H01M 4/485;
H01M 10/052; H01M 2200/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority:   03.07.2024   KR 20240087708

(71) Applicant: SAMSUNG SDI CO., LTD.
**Yongin-si, Gyeonggi-do 17084 (KR)**

(72) Inventors:
  • LIM, Hongjin
    17084 Yongin-si, Gyeonggi-do (KR)
  • WOO, Myungheui
    17084 Yongin-si, Gyeonggi-do (KR)

  • CHA, Siyoung
    17084 Yongin-si, Gyeonggi-do (KR)
  • GOH, Aehui
    17084 Yongin-si, Gyeonggi-do (KR)
  • KANG, Inah
    17084 Yongin-si, Gyeonggi-do (KR)
  • SIM, Minji
    17084 Yongin-si, Gyeonggi-do (KR)
  • JEONG, Hanmam
    17084 Yongin-si, Gyeonggi-do (KR)
  • YU, Arum
    17084 Yongin-si, Gyeonggi-do (KR)

(74) Representative: **Michalski Hüttermann & Partner Patentanwälte mbB**
**Kaistraße 16A**
**40221 Düsseldorf (DE)**

(54) **CURRENT COLLECTORS FOR RECHARGEABLE LITHIUM BATTERIES, ELECTRODES INCLUDING THE SAME, AND RECHARGEABLE LITHIUM BATTERIES INCLUDING THE SAME**

(57)   Examples of the disclosure include a current collector for a rechargeable lithium battery, an electrode including the current collector, and a rechargeable lithium battery including the current collector. The current collector for a rechargeable lithium battery includes a first electrically conductive layer, a second electrically conductive layer, and a fiber-reinforcing layer located between the first electrically conductive layer and the second electrically conductive layer, the fiber-reinforcing layer including a reinforcing fiber and a polymer.

FIG. 2

EP 4 675 704 A2

**Description**

**BACKGROUND**

**1. Field**

Current collectors for rechargeable lithium batteries, electrodes including the current collectors, and rechargeable lithium batteries including the current collectors are disclosed.

**2. Description of the Related Art**

A rechargeable lithium battery may be recharged and may have, e.g., three or more times as high of an energy density per unit weight as a conventional lead storage battery, nickel-cadmium battery, nickel hydrogen battery, nickel zinc battery and the like. A rechargeable lithium battery may be also charged at a high rate and thus, may be commercially manufactured for a laptop, a cell phone, an electric tool, an electric bike, and the like.

A rechargeable lithium battery is typically manufactured by injecting an electrolyte solution into an electrode assembly, which includes a positive electrode including a positive electrode active material capable of intercalating/-deintercalating lithium ions and a negative electrode including a negative electrode active material capable of intercalating/deintercalating lithium ions.

Rechargeable lithium batteries with high energy density are typically used across industries (e.g., IT devices, power tools, electric vehicles, and the like).

However, when the rechargeable lithium batteries with high energy density are deformed by physical and/or chemical factors (e.g., impact, penetration, overcharge, over-discharge, foreign substance mixing, Li dendrite formation on the negative electrode surface, separator shrinkage, etc.), electrical short-circuiting circuits may occur, which may lead to thermal runaway and/or explosion.

Conventional polymer layers that are typically placed between electrically conductive layers (e.g., metal layers such as Al thin films or Cu thin films) to reduce or suppress electrical short-circuiting, thermal runaway, and/or explosion of rechargeable lithium batteries due to such physical and/or chemical factors present a challenge in controlling pinholes due to the thin film advancement and in overcoming the tensile force applied during compressing/winding.

**SUMMARY**

Some example embodiments include a current collector including a fiber-reinforced layer having improved mechanical properties while reducing or suppressing electrical short-circuiting, thermal runaway, and/or explosion of a rechargeable lithium battery caused by physical and/or chemical factors.

Some example embodiments include an electrode including the current collector of the above example embodiment.

Some example embodiments include a rechargeable lithium battery including the current collector of the above example embodiment.

Some example embodiments include a current collector for a rechargeable lithium battery, the current collector including a first electrically conductive layer, a second electrically conductive layer, and a fiber-reinforcing layer located between the first electrically conductive layer and the second electrically conductive layer, the fiber-reinforcing layer including a reinforcing fiber and a polymer.

Some example embodiments include an electrode including the current collector of the above example embodiment.

Some example embodiments include a rechargeable lithium battery which includes a positive electrode including a positive electrode current collector, a negative electrode including a negative electrode current collector, and an electrolyte between the positive electrode and the negative electrode, wherein at least one of the positive electrode current collector and the negative electrode current collector includes the current collector according to some example embodiments.

According to some example embodiments, the current collector reduces or suppresses electrical short-circuiting, thermal runaway, and/or explosion of a rechargeable lithium battery caused by physical and/or chemical factors, while improving mechanical properties, thereby enabling safe operation of a rechargeable lithium battery.

**BRIEF DESCRIPTION OF THE DRAWINGS**

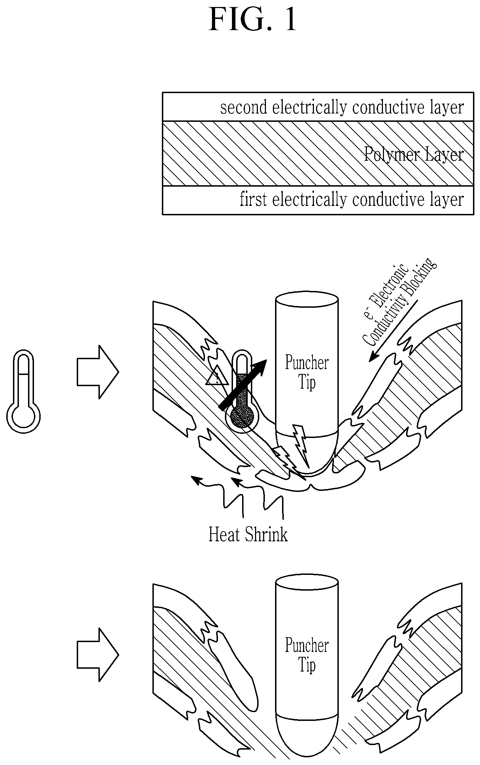

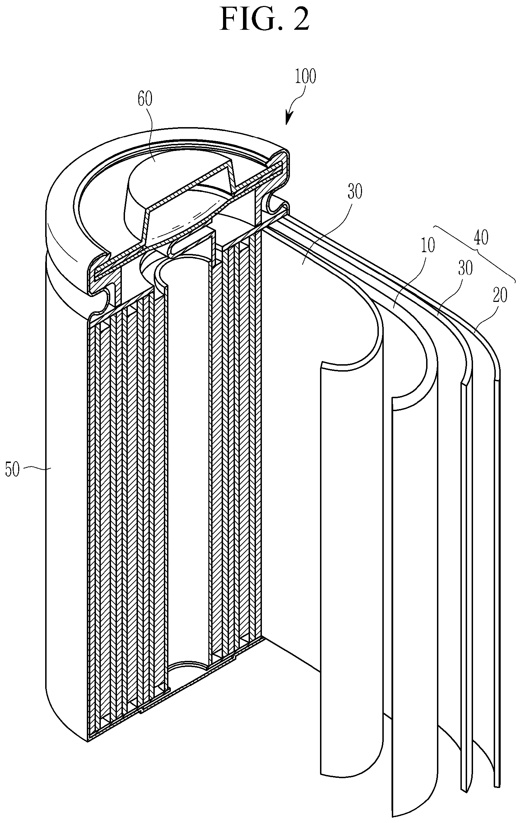

FIG. 1 is a schematic view illustrating the mechanism of a conventional current collector 2 during short circuit. FIGS. 2 to 5 are schematic views illustrating rechargeable lithium batteries, according to some example embodiments.

## DETAILED DESCRIPTION

Hereinafter, example embodiments are described in detail. However, these embodiments are examples, the present disclosure is not limited thereto and the present disclosure is defined by the scope of claims.

As used herein, when specific definition is not otherwise provided, It is understood that when an element such as a layer, film, region, or substrate is referred to as being "on" another element, it can be directly on the other element or intervening elements may also be present.

As used herein, when specific definition is not otherwise provided, the singular may also include the plural. In addition, unless otherwise specified, "A or B" may mean "including A, including B, or including A and B."

As used herein, "combination thereof" may mean a mixture, a stack, a composite, a copolymer, an alloy, a blend, and a reaction product of constituents.

As used herein, when specific definition is not otherwise provided, "substituted" refers to replacement of at least one hydrogen atom of a compound by a substituent such as or including at least one of a halogen atom (F, Cl, Br, or I), a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, or a combination thereof.

As used herein, when specific definition is not otherwise provided, "heterocycloalkyl group," "heterocycloalkenyl group," "heterocycloalkynyl group," and "heterocycloalkylene group" means that at least one heteroatom of N, O, S or P is present in the ring compound of cycloalkyl, cycloalkenyl, cycloalkynyl, and cycloalkylene, respectively.

In chemical formulas of the present specification, unless a specific definition is otherwise provided, hydrogen is bonded at the position when a chemical bond is not drawn where supposed to be given.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

## Current Collector

Some example embodiments include a current collector for a rechargeable lithium battery including a first electrically conductive layer, a second electrically conductive layer, and a fiber-reinforcing layer located between the first electrically conductive layer and the second electrically conductive layer, the fiber-reinforcing layer including a reinforcing fiber and a polymer.

The first electrically conductive layer and the second electrically conductive layer are elements configured to transmit current to or from the active material during charging and discharging, and function as a generally known current collector (hereinafter referred to as "conventional current collector 1"), such as an electrically conductive layer, for example, an Al thin film or a Cu thin film.

However, when the conventional current collector 1 is used, when deformed by physical and/or chemical factors, electric short circuits, thermal runaway, and/or explosion of rechargeable lithium batteries may occur.

In this regard, a current collector (hereinafter referred to as "conventional current collector 2") has been proposed in which an intermediate layer made of a polymer (hereinafter referred to as "polymer layer") is inserted between the first electrically conductive layer and the second electrically conductive layer.

Referring to FIG. 1, when the conventional current collector 2 is deformed by physical and/or chemical factors, the conventional current collector 2 behaves as described below to reduce or suppress electrical short-circuiting, thermal runaway, and/or explosion of the rechargeable lithium battery.

1) First, the polymer layer has high ductility compared to the first electrically conductive layer and the second electrically conductive layer. Accordingly, when the conventional collector 2 is deformed due to physical and/or chemical factors, the polymer layer is physically elongated with thermal shrinkage, while the first electrically conductive layer and the second electrically conductive layer are broken. As a result, the portions where the first electrically conductive layer and the second electrically conductive layer are broken may become electrically isolated.

2) Despite the mechanism described above, local short circuits may occur in the conventional current collector 2, generating Joule's heat, wherein the polymer forming the polymer layer may be thermally deformed and/or exhibit an increase in resistance, thereby blocking current transfer between the first electrically conductive layer and the second electrically conductive layer, and reducing or suppressing the electric short circuits, thermal runaway, and/or explosion of rechargeable lithium batteries.

However, even when the conventional collector 2 is used, a challenge may arise in that pinhole control may become challenging due to the thin film advancement of the polymer layer, and it may be challenging to overcome the tensile force applied during compressing/winding.

Accordingly, in some example embodiments, by positioning a fiber-reinforced layer including reinforcing fibers together with a polymer between the first electrically conductive layer and the second electrically conductive layer, electrical short-circuiting, thermal runaway, and/or explosion of a rechargeable lithium battery due to physical and/or chemical factors can be reduced or suppressed while improving mechanical properties.

According to some example embodiments, the current collector has the advantages discussed above of the conventional current collector 2 as the current collector includes a polymer in the fiber-reinforced layer, and further includes reinforcing fibers to address issues occurring due to the thin film advancement of the fiber-reinforced layer.

Hereinafter, the current collector of some example embodiments is described in more detail.

Reinforcing Fiber

The reinforcing fiber may be included as reinforcing materials in the field of fiber-reinforced composite materials. The reinforcing fibers may be applied as reinforcing materials for polymers included in the fiber-reinforced layer, thereby improving mechanical properties compared to a polymer layer composed of a single polymer.

The fiber-reinforced layer may be manufactured in the same manner as a conventional fiber-reinforced composite material, by impregnating reinforcing fibers with a polymer as described below. For example, the fiber-reinforced layer may be manufactured by impregnating reinforcing fibers into a polymer. An example method for impregnating the polymer with reinforcing fibers can utilize a method known in the art.

The reinforcing fibers in the above-discussed fiber-reinforced layer provide tensile resistance to the fiber-reinforced layer, and the fiber-reinforced layer can solve problems (difficulty in controlling pinholes, difficulty in overcoming tensile force applied during compressing/winding) that occur due to the thin film advancement of the above-mentioned polymer layer. For example, the fiber-reinforced layer reduces the occurrence of pinholes that occur during the thin film forming process of the aforementioned polymer layer, while alleviating stress concentration in the pinholes and resisting tensile force applied during compressing and winding, thereby controlling premature short-circuiting (breakage of the first and second electrically conductive layers hereinafter) that occurs during manufacturing.

The reinforcing fibers may have an elongation of less than about 100% relative to 100% elongation of the polymer.

The upper limit of the elongation of the reinforcing fibers relative to 100% elongation of the polymer may be substantially equal to about 90%, about 80%, about 70%, about 60%, about 50%, about 40%, about 30%, about 20%, about 10%, about 9%, about 8%, about 7%, or about 6%, and the lower limit is not limited, but may be, for example, substantially equal to about 0.1%, about 0.5%, about 1%, about 2%, about 3%, about 4%, or about 5%.

The elongation of the reinforcing fiber may be less than or equal to any one of the upper limits described above, relative to 100% of the elongation of the polymer; or may be greater than or equal to any one of the lower limits described above. Regardless of the type of polymer, when the elongation of the reinforcing fiber compared to the elongation of the polymer at 100% satisfies any of the above ranges, the anisotropic Young's modulus and tensile resistance of the current collector may be adjusted within an appropriate range. For example, as the elongation of the reinforcing fibers is lower than the elongation of the polymer, the anisotropic Young's modulus increases, which can reduce or suppress the elongation of the polymer. In contrast, when the elongation of the reinforcing fiber is similar to or higher than the elongation of the polymer, the anisotropic Young's modulus decreases, and accordingly, the elongation of the polymer cannot be reduced or suppressed, making it challenging to secure the mechanical properties of the current collector.

The reinforcing fiber may be or include at least one of an organic fiber, an inorganic fiber, or a mixture thereof.

The organic fiber may include at least one of a polyester fiber, a polyamide fiber, an amide fiber, a polyarylate fiber, a polyethylene fiber, a polyacrylonitrile fiber, a polyimide fiber, a polybutylene terephthalate fiber, a polyethylene naphthalate fiber, a polyacetal fiber, a PBO fiber, a polyphenylene sulfide fiber, a poly ketone fiber, or a combination thereof. The type of the organic fiber is not limited as long as the organic fiber can impart tensile resistance to the fiber-reinforced layer and improve tensile strength.

The inorganic fiber may include at least one of a glass fiber, a carbon fiber, a ceramic fiber, a metal fiber, or a combination thereof.

The glass fiber may include at least one of E-glass, A-glass, C-glass, D-glass, AR-glass, R-glass, S-glass, etc., the carbon fiber may include a graphite fiber, the ceramic fiber may include at least one of a silica fiber, an alumina fiber, an aluminosilicate fiber, etc., and the metal fiber may include a stainless steel fiber, etc. The type of the inorganic fiber is not limited as long as the inorganic fiber can impart tensile resistance to the fiber-reinforced layer and improve tensile strength.

The reinforcing fibers can be arranged unidirectionally, woven, or randomly within the fiber-reinforced layer. The arrangement of the reinforcing fibers is based on the machine direction (MD) or transverse direction (TD) during film forming.

The unidirectional arrangement means that the reinforcing fibers are arranged in one direction (e.g., lengthwise or widthwise) based on the cross-section of the fiber-reinforced layer, the woven arrangement indicates a structure in which the fibers are interwoven and woven, and the random arrangement means a structure in which the fibers are randomly distributed.

According to some example embodiments, the reinforcing fibers can be arranged unidirectionally within the fiber-reinforced layer. Additional tensile resistance can be provided by unidirectionally arranging the reinforcing fibers so that the arrangement direction and width direction are aligned.

A weight per square meter of the reinforcing fiber may be in a range of about 0.5 $g/m^2$ to about 15 $g/m^2$, or about 3 $g/m^2$ to about 10 $g/m^2$.

When the reinforcing fibers are randomly arranged, the reinforcing fibers may have an aspect ratio. For example, the aspect ratio of the reinforcing fiber may be in a range of about 500 to about 1,000, for example about 150 to about 250, about 50 to about 100, or about 5 to about 25.

The reinforcing fiber may be in the form of fiber structures such as at least one of short fibers, long fibers, continuous fibers, fabrics, knits, non-woven fabrics, braids, and mats, which are clearly known in the field of fiber-reinforced composite material technology, but are not limited thereto.

The reinforcing fiber in the form of the fiber structure may be stacked in at least one layer. For example, the reinforcing fiber in the form of the above-mentioned fiber structure may have a stacked structure composed of two or more layers in which reinforcing fibers of one layer aligned in one direction are stacked on one layer with different arrangement directions.

A content of the reinforcing fiber may be within an appropriate range based on 100 wt% of the fiber-reinforced layer. For example, a content of the reinforcing fiber may be in a range of about about 0.2 wt% to about 98 wt%, 10 wt% to about 90 wt%, about 20 wt% to about 80 wt%, about 30 wt% to about 70 wt%, or about 40 wt% to about 60 wt% based on 100 wt% of the fiber-reinforced layer. When the content of the above reinforcing fibers satisfies the above range based on 100 wt% of the fiber-reinforced layer, the polymer in the fiber-reinforced layer may reduce or suppress electrical short-circuiting, thermal runaway, and/or explosion of a rechargeable lithium battery due to physical and/or chemical factors, while improving the mechanical strength of the fiber-reinforced layer.

Polymer

As the polymer in the fiber-reinforced layer, a polymer having desired or improved electrical insulating properties and chemical resistance may be used.

A polymer having the properties may be or include a thermoplastic resin or a thermosetting resin.

The thermoplastic resin may include at least one of polypropylene (PP), polyethylene (PE), polyethylene terephthalate (PET), polyvinyl chloride (PVC), polystyrene (PS), acrylonitrile butadiene styrene (ABS), polymethyl methacrylate (PMMA), polyvinyl alcohol (PVA), polyvinylidene-chloride (PVDC), polyamide (PA), polyoxymethylene (POM), polycarbonate (PC), polyphenylene ether (PPE), polybutylene terephthalate (PBT), polysulfone (PSU), polyethersulfone (PES), polyphenylene sulfide (PPS), polyethylenimine (PEI), or a combination thereof, or a combination of monomers constituting the above.

The thermosetting resin may include at least one of polyurethane (PU), epoxy, phenolic, polyimide, unsaturated polyester, vinyl polyester, a combination thereof, or a combination of monomers constituting the above.

For example, the polymer may include a thermoplastic resin, may include polyester terephthalate, may include polyethylene terephthalate (PET), polybutylene terephthalate (PBT), or a combination thereof.

The polymer may have a thickness non-uniformity in a range of about 0.01% to about 7.5%, about 0.05% to about 5.0%, or about 0.1% to about 4.0% in the MD direction. When the thickness non-uniformity exceeds the above range, there is a risk of insulation breakdown, tearing, and worsening of the appearance, which may cause a decrease in electrode yield, a decrease in battery capacity, and/or a short circuit, thereby reducing the reliability of the rechargeable lithium battery.

An intrinsic viscosity of the polymer, as measured according to ASTM D4603-03, may be in a range of about 0.01 dL/g to about 5 dL/g, about 0.1 dL/g to about 3 dL/g, or about 0.6 dL/g to about 1 dL/g. In the above range, a fiber-reinforced layer including the polymer can be formed into a film form.

A content of the polymer may be within an appropriate range based on 100 parts by weight of the reinforcing fiber. For example, the content of the polymer may be in a range of about 2 parts by weight to about 200 parts by weight, about 10 parts by weight to about 150 parts by weight, or about 30 parts by weight to about 120 parts by weight based on 100 parts by weight of the fiber-reinforced layer.

Functional Material

The fiber-reinforced layer according to some example embodiments may further include a functional material in addition to the reinforcing fiber and the polymer. The functional material may include a foaming agent, a fire retardant, and a fire extinguishing agent. The functional material may be included alone or in combination of two or more materials.

The foaming agent is activated (e.g., foamed) by the Joule heat generated in the current collector, and is configured to fix the deformation of the current collector in which a local short circuit has occurred, thereby blocking potential hazards such as electrolyte solution leakage.

The foaming agent in the fiber-reinforced layer may be or include at least one of a physical foaming agent, a chemical foaming agent, or a combination thereof.

The physical foaming agent can be activated (e.g., foamed) by a phase change, etc., and may include at least one of an aliphatic hydrocarbon, a fluorinated aliphatic hydrocarbon, or a combination thereof.

The physical foaming agent may be or include at least one of expanded graphite, methane, ethane, propane, n-butane, isobutane, n-pentane, isopentane, neopentane, methanol, ethanol, n-propanol, isopropanol, methyl fluoride, perfluoromethane, ethyl fluoride, 1,1-difluoroethane, trifluoroethane, 1,1,1,2-tetrafluoroethane. pentafluoroethane, difluoromethane, perfluoroethane, 2,2-difluorobutane, perfluorocyclo butane, methyl chloride, methylene chloride, ethyl chloride, 1,1,1-trichloroethane, 1,1-dichloro-1-fluoroethane(HCFC-141b), 1-chloro-1,1-difluoroethane (HCFC-142b), chlorodifluoromethane (HCFC-22), 1,1-dichloro-2,2,2-trifluoroethane (HCFC-123), 1-chloro-1,2,2,2-tetrafluoroethane (HCFC-124), trichloromonofluoromethane (CFC-11), dichlorodifluoromethane (CFC-12), trichlorotrifluoroethane (CFC-113), 1,1,1-trifluoroethane, pentafluoroethane, dichlorotetrafluoroethane (CFC-114), chloroheptafluoropropane, dichlorohexafluoropropane, or a combination thereof.

When forming the fiber-reinforced layer through a solvent casting method, pre-foaming of the physical foaming agent can be reduced or suppressed by encapsulating the physical foaming agent using a different type of polymer.

The chemical foaming agent can be activated (e.g., foamed) by a chemical reaction, and is divided into an inorganic chemical foaming agent and an organic chemical foaming agent depending on the composition of the foaming agent.

The inorganic chemical foaming agent may include at least one of sodium bicarbonate ($NaHCO_3$), ammonium bicarbonate ($NH_4HCO_3$), sodium borohydride ($NaBH_4$), or a combination thereof.

The organic chemical foaming agent may include at least one of hydrazide, azodicarbonamide, p,p'-oxybis(benzenesulfonylhydrazide), dinitroso pentamethylene tetramine, an oligomer thereof, a polymer thereof, or a combination thereof.

The type of the foaming agent is not limited as long as the foaming agent can be used as a foaming agent in addition to the types described above.

The flame retardant is configured to delay ignition and reduce or prevent the spread of combustion even when an electrical short-circuiting, thermal runaway, and/or explosion of a rechargeable lithium battery occurs due to physical and/or chemical factors.

The flame retardant may be or include a material such as or including at least one of a halogen-based flame retardant, a phosphorus-based flame retardant, an inorganic compound, and silicone.

The halogen-based flame retardant generally exhibits flame retardant properties by substantially stabilizing radicals generated in the gas phase. The halogen-based flame retardant may include at least one of tribromophenoxyethane, tetrabromobisphenol-A (TBBA), octabromodiphenyl ether (OBDPE), brominated epoxy, a brominated polycarbonate oligomer, chlorinated paraffin, chlorinated polyethylene, and an alicyclic chlorinated flame retardant.

The phosphorus-based flame retardant in general produces polymetaphosphoric acid through a thermal decomposition, wherein a protective layer formed by the polymetaphosphoric acid or a carbon film formed by a dehydration, when the polymetaphosphoric acid is produced, hinders or blocks oxygen, thereby exerting a flame retardant effect. Examples of the phosphorus-based flame retardant include at least one of phosphates such as red phosphorus, ammonium phosphate, and the like, phosphine oxides, phosphine oxide diols, phosphites, phosphazenes, phosphonates, triaryl phosphates, alkyldiaryl phosphates, trialkyl phosphates, resorcinaol bisdiphenyl phosphates (RDP), etc.

The inorganic compound flame retardant is in general decomposed by heat and releases water or non-combutstible gases such as carbon dioxide, sulfur dioxide, hydrogen chloride, and the like and causes an endothermic reaction and thereby dilutes combustible gases to reduce or prevent the access of oxygen, cooling through the endothermic reaction, and reducing the production of thermal decomposition products, thereby exerting a flame retardant effect. Examples of the inorganic compound flame retardant may be or include at least one of aluminum hydroxides, magnesium hydroxides, antimony oxides, tin hydroxides, tin oxides, molybdenum oxides, zirconium compounds, borates, calcium salts, and the like.

The flame retardant is not limited to the aforementioned types but may include any type as long as the compound may be used as a flame retardant.

The fire extinguishing agent may play a role of removing one or more of the three elements of ignition. In other words, when an electrical short-circuit, thermal runaway, and/or explosion of a rechargeable lithium battery occurs due to physical and/or chemical factors, the fire extinguishing agent distributed in the fiber-reinforced layer may reduce or prevent heat generation, ignition, and explosion.

The fire extinguishing agent may be or include a mixture of two or more materials including at least one of alkali, acid, a carbon compound, a carbonate compound, a nitrogen compound, water, and a surfactant.

For example, at least one of a fire extinguishing agent including potassium bicarbonate as a main component, a fire extinguishing agent including sodium bicarbonate as a main component, a fire extinguishing agent including a reaction product of potassium bicarbonate and urea as a main component, and a fire extinguishing agent including ammonium phosphate dihydrate as a main component, may be used.

The fire extinguishing agent may include any type of fire extinguishing agent in addition to the aforementioned types, and in addition, the fire extinguishing agent may be composed of any solid, liquid, and gas.

The functional materials may be included in one or more types, and a content of the functional materials may be within an appropriate range based on 100 wt% of the fiber-reinforced layer. For example, the content of the functional materials may be in a range of about 0.1 wt% to about 25 wt%, about 0.2 wt% to about 20 wt%, or about 0.5 wt% to about 10 wt% based on 100 wt% of the fiber-reinforced layer.

Other Additives

The fiber-reinforced layer may further include other additives in addition to the reinforcing fiber, the polymer, and optionally the functional material.

The fiber-reinforced layer according to some example embodiments may further include a plasticizer to control elongation.

The plasticizer may be or include at least one of glycerin, ethylene glycol, polyethylene glycol, propylene glycol, diethylene glycol, triethylene glycol, propylene, ethylene, ethylphenephthalate, an oligomer thereof, a polymer thereof, or a combination thereof.

A content of the plasticizer may be in a range of about 0.1 wt% to 10 about wt%, about 0.2 wt% to about 5 wt%, or about 0.5 wt% to about 2 wt% based on 100 wt% of the fiber-reinforced layer. When the plasticizer is included in the fiber-reinforced layer within the above range based on 100 wt% of the fiber-reinforced layer, the elongation of the fiber-reinforced layer can be increased compared to before the addition of the plasticizer.

Structure of Fiber-reinforced Layer

The fiber-reinforced layer is not limited in a shape, as long as the fiber-reinforced layer includes the aforementioned reinforcing fiber and the polymer.

For example, the fiber-reinforced layer may have a monolayer structure in which the reinforcing fiber and the polymer are included in one layer or a multi-layer structure of two or more layers in which the reinforcing fiber and the polymer are included in each separate layer. When the fiber-reinforced layer has the multi-layer structure, a layer including the reinforcing fiber and another layer including the polymer may be stacked, e.g., sequentially and alternately stacked, and when stacked between the first electrically conductive layer and the second electrically conductive layer, there is no limitation on the stacking order.

The fiber-reinforced layer according to some example embodiments may have a monolayer structure in which the reinforcing fiber and the polymer are included in one layer or a bilayer structure in which the reinforcing fiber is included in one layer, while the polymer is included in the other layer.

In some example embodiments, when the fiber-reinforced layer has the bilayer structure in which the reinforcing fiber is included in one layer, while the polymer is included in the other layer, a method of high-temperature laminating reinforcing fibers on a polymer resin film may be included to form the fiber-reinforced layer on the layer including the polymer.

Electrically Conductive Layer (first electrically conductive layer and second electrically conductive layer)

The first electrically conductive layer and the second electrically conductive layer commonly have electrical conductivity. Herein, the first electrically conductive layer and the second electrically conductive layer may have electrical conductivity in a planar direction but no electrical conductivity in a thickness direction.

The first electrically conductive layer and second electrically conductive layer may be formed by using any material capable of exhibiting electrical conductivity.

According to some example embodiments, the first electrically conductive layer and the second electrically conductive layer each independently are or include a metal layer or a carbon layer.

The metal layer may include at least one of aluminum (Al), nickel (Ni), copper (Cu), iron (Fe), silver (Ag), gold (Au), tungsten (W), zinc (Zn), platinum (Pt), tin (Sn), or a combination thereof.

The carbon layer may include carbon (C), and may include, for example, at least one of graphene, carbon nanotubes, graphite, amorphous carbon, etc.

For example, when the current collector of some example embodiments is applied to a positive electrode, aluminum (Al) may be included as the first electrically conductive layer and the second electrically conductive layer, and when the current collector of some example embodiments is applied to a negative electrode, copper (Cu) may be included as the first electrically conductive layer and the second electrically conductive layer.

A thickness ratio of the first electrically conductive layer and the second electrically conductive layer may be in a range of about 3:7 to about 7:3, or about 4:6 to about 6:4. For example, the thicknesses of the first electrically conductive layer and the second electrically conductive layer may be substantially the same.

The sum of the thicknesses of the first electrically conductive layer and the second electrically conductive layer may be less than or equal to about 40 thickness%, less than or equal to about 30 thickness%, less than or equal to about 25 thickness%, or less than or equal to about 5 thickness% of 100 thickness% of the total thickness of the current collector. Within this range, the effects of the first electrically conductive layer and the second electrically conductive layer and the effects of the fiber-reinforced layer may be harmonized.

Depending on the thickness of the electrically conductive layer, the surface resistance of the current collector may vary. For example, a current collector having the fiber-reinforced layer alone without the first electrically conductive layer and the second electrically conductive layer may have a sheet resistance of about 0.01 mΩ/sq. In another example, a current collector including the first electrically conductive layer and the second electrically conductive layer may have a sheet resistance that is greater than or equal to about 0.01 mΩ/sq, which may be increased to about 12.4 mΩ/sq according to thicknesses of the first electrically conductive layer and the second electrically conductive layer. The sheet resistance of the current collector can be typically measured using a 4-point probe device that can measure the sheet resistance of bulk thin films.

The first electrically conductive layer and the second electrically conductive layer may be formed via, e.g., deposition, coating, laminating, electroplating, etc.

Adhesive Layer

An adhesive layer may further be included at the interface between the first electrically conductive layer and/or the second electrically conductive layer and the fiber-reinforced layer.

The adhesive layer can improve adhesive strength and weldability between the polymer in the fiber-reinforced layer and the first electrically conductive layer and/or the second electrically conductive layer. The high bonding energy of metal-oxygen at the atomic level can enhance the interfacial adhesive strength, and the adhesive strength can be proportional (desirably based on metal-O-C bond) with the atomic content containing lone pairs in the fiber-reinforced layer.

The adhesive layer can be formed by physically and/or chemically functionalizing the surface of the fiber-reinforced layer using at least one of single molecules, oligomers, polymers, or a combination thereof containing a large amount of highly electronegative atoms (for example, at least one of polymethyl methacrylate (PMMA) including a carbonyl group, polycarbonate (PC), polyamide (PA), polyetheretherketone (PEEK), polyetherimide (PEI), acrylonitrile-butadiene-styrene (ABS), or a combination thereof).

In particular, plasma treatment or corona discharge treatment for chemical functionalization enables substantially uniform treatment on the film surface, and can increase the effect depending on the type of gas in the processing atmosphere. Nitrogen, oxygen, argon, silane gas, carbon dioxide gas, etc. can be included as the gas for the atmosphere, but a mixed gas containing oxygen and/or nitrogen may be desirable, and by plasma treatment, ether groups, carbonyl groups, ester groups, carboxyl groups, hydroxy groups, and amide groups are substantially uniformly functionalized on the film surface, thereby improving the substantially uniform adhesion of various metal and alloy layers, including aluminum and copper, to the electrode, and improving the reliability of the electrode.

For example, an adhesive layer may be further included between the first electrically conductive layer and the fiber-reinforced layer, an adhesive layer may be further included between the second electrically conductive layer and the fiber-reinforced layer, or an adhesive layer may be further included between both the first electrically conductive layer and the fiber-reinforced layer and between the second electrically conductive layer and the fiber-reinforced layer.

**Electrode and Rechargeable Lithium Battery**

Some example embodiments include an electrode including the current collector of the above example embodiments.

The electrode may be or include a positive electrode or a negative electrode.

Some example embodiments include a rechargeable lithium battery including a positive electrode including a positive electrode current collector, a negative electrode including a negative electrode current collector, and an electrolyte between the positive electrode and the negative electrode, wherein at least one of the positive electrode current collector and the negative electrode current collector includes the current collector of the above example embodiments. The rechargeable lithium battery may further include a separator impregnated with the electrolyte between the positive electrode and the negative electrode.

In other words, in one rechargeable lithium battery, the current collector of some example embodiments can be applicable as a positive electrode current collector, a negative electrode current collector, or both.

Hereinafter, excluding overlapping descriptions, the electrode and rechargeable lithium battery including the current collector of the above embodiments are described in detail.

Positive Electrode Active Material

The positive electrode active material may be or include a compound (lithiated intercalation compound) capable of intercalating and deintercalating lithium. For example, one or more types of composite oxides of lithium and a metal such as or including at least one of cobalt, manganese, nickel, and combinations thereof may be used.

The composite oxide may be or include a lithium transition metal composite oxide, and examples may include at least one of a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any of the following chemical formulas may be used. $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}CO_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); and $Li_aFePO_4$ ($0.90 \leq a \leq 1.8$).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, at least one of a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

Chemical Formula 11: $Li_{a1}Ni_{x1}M^1_{y1}M^2_{z1}O_{2-b1}X_{b1}$

In Chemical Formula 11, $0.9 \leq a1 \leq 1.8$, $0.3 \leq x1 \leq 1$, $0 \leq y1 \leq 0.7$, $0 \leq z1 \leq 0.7$, $0.9 \leq x1+y1+z1 \leq 1.1$, and $0 \leq b1 \leq 0.1$, $M^1$ and $M^2$ each independently are or include one or more of Al, B, Ba, Ca, Ce, Co, Cr, Cu, Fe, Mg, Mn, Mo, Nb, Si, Sn, Sr, Ti, V, W, and Zr, and X is or includes one or more of F, P, and S.

In Chemical Formula 11, $0.6 \leq x1 \leq 1$, $0 \leq y1 \leq 0.4$, and $0 \leq z1 \leq 0.4$, or $0.8 \leq x1 \leq 1$, $0 \leq y1 \leq 0.2$, and $0 \leq z1 \leq 0.2$.

Chemical Formula 12: $Li_{a2}CO_{x2}M^3_{y2}O_{2-b2}X_{b2}$

In Chemical Formula 12, $0.9 \leq a2 \leq 1.8$, $0.7 \leq x2 \leq 1$, $0 \leq y2 \leq 0.3$, $0.9 \leq x2+y2 \leq 1.1$, and $0 \leq b2 \leq 0.1$, $M^3$ is or includes one or more of Al, B, Ba, Ca, Ce, Cr, Cu, Fe, Mg, Mn, Mo, Ni, Se, Si, Sn, Sr, Ti, V, W, Y, Zn, and Zr, and X is or includes one or more of F, P, and S.

Chemical Formula 13: $Li_{a3}Fe_{x3}M^4_{y3}PO_{4-b3}X_{b3}$

In Chemical Formula 13, $0.9 \leq a3 \leq 1.8$, $0.6 \leq x3 \leq 1$, $0 \leq y3 \leq 0.4$, and $0 \leq b3 \leq 0.1$, $M^4$ is or includes one or more of Al, B, Ba, Ca, Ce, Co, Cr, Cu, Mg, Mn, Mo, Ni, Se, Si, Sn, Sr, Ti, V, W, Y, Zn, and Zr, and X is or includes one or more of F, P, and S.

Chemical Formula 14: $Li_{a4}Ni_{x4}Mn_{y4}M^5_{z4}O_{2-b4}X_{b4}$

In Chemical Formula 14, $0.9 \leq a4 \leq 1.8$, $0.8 \leq x4 < 1$, $0 < y4 \leq 0.2$, $0 \leq z4 \leq 0.2$, $0.9 \leq x4+y4+z4 \leq 1.1$, and $0 \leq b4 \leq 0.1$, $M^5$ is or includes one or more of Al, B, Ba, Ca, Ce, Cr, Fe, Mg, Mo, Nb, Si, Sn, Sr, Ti, V, W, and Zr, and X is or includes one or more of F, P, and S.

As an example, the positive electrode active material may be or include a high nickel-based positive electrode active material having a nickel content that is greater than or equal to about 80 mol%, greater than or equal to about 85 mol%, greater than or equal to about 90 mol%, greater than or equal to about 91 mol%, or greater than or equal to about 94 mol%, and less than or equal to about 99 mol% based on 100 mol% of metals excluding lithium in the lithium transition metal composite oxide. When the content of nickel relative to 100 mol% of metals excluding lithium in the lithium transition metal composite oxide satisfies the above range, the lithium transition metal composite oxide is a high-nickel positive electrode active material, thereby the positive electrode active material can achieve high capacity and can be applied to high-capacity, high-density rechargeable lithium batteries.

Positive Electrode

The positive electrode for a rechargeable lithium battery may include a current collector and a positive electrode active material layer on the current collector. The positive electrode active material layer may include a positive electrode active material, and may further include a binder and/or a conductive material.

For example, the positive electrode may further include an additive that can function as a sacrificial positive electrode.

An amount of the positive electrode active material may be in a range of about 90 wt% to about 99.5 wt%, and the amount of each of the binder and the conductive material may be in a range of about 0.5 wt% to about 5 wt% based on 100 wt% of the positive electrode active material layer.

The binder is configured to attach the positive electrode active material particles to each other and also to attach the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

The conductive material may be configured to impart conductivity (e.g., electrical conductivity) to the electrode. Any material that does not cause chemical change (e.g., does not cause an undesirable chemical change in the rechargeable lithium battery) and conducts electrons may be included in the battery. Examples of the conductive material may include a carbon-based material such as or including at least one of natural graphite, artificial graphite, carbon black, acetylene black, ketjen black, a carbon fiber, a carbon nanofiber, and carbon nanotube; a metal-based material including at least one of copper, nickel, aluminum, silver, etc., in a form of a metal powder or a metal fiber; a conductive polymer such as a polyphenylene derivative; or a mixture thereof. Al may be included as the current collector, but is not limited thereto, and the current collector of the above-described example embodiment may be used. In the latter case, the first electrically conductive layer and the second electrically conductive layer may include aluminum (Al)

Negative Electrode Active Material

The negative electrode active material may be or include at least one of a material that reversibly intercalates/deintercalates lithium ions, a lithium metal, a lithium metal alloy, a material capable of doping and dedoping lithium, or a transition metal oxide.

The material that reversibly intercalates/deintercalates lithium ions may include a carbon-based negative electrode active material, for example, crystalline carbon, amorphous carbon or a combination thereof. The crystalline carbon may be or include graphite such as non-shaped, plate-shaped, flake-shaped, substantially sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy may include lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiO_x$ ($0 < x \leq 2$), and a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, an Sn-based alloy, or a combination thereof.

The silicon-carbon composite may be or include a composite of silicon and amorphous carbon. According to some example embodiments, the silicon-carbon composite may be in a form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be included in combination with a carbon-based negative electrode active material.

Negative Electrode

A negative electrode for a rechargeable lithium battery includes a current collector and a negative electrode active material layer on the current collector. The negative electrode active material layer includes a negative electrode active material, and may further include a binder and/or a conductive material.

For example, the negative electrode active material layer may include about 90 wt% to about 99 wt% of the negative electrode active material, about 0.5 wt% to about 5 wt% of the binder, and about 0.5 wt% to about 5 wt% of the conductive material.

The binder may be configured to attach the negative electrode active material particles to each other, and also to attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is included as the negative electrode binder, the aqueous binder may further include a cellulose-based compound capable of imparting viscosity. The cellulose-based compound includes one or more of carboxylmethyl cellulose, hydroxypropylmethyl cellulose, methyl cellulose, or alkali metal salts thereof. The alkali metal may be or include at least one of Na, K, or Li.

The dry binder may be or include a polymer material capable of being fiberized, and may be or include, for example, at least one of polytetrafluoroethylene, polyvinylidene fluoride, polyvinylidene fluoride-hexafluoropropylene copolymer, polyethylene oxide, or a combination thereof.

The conductive material is included to provide electrode conductivity, and any electrically conductive material may be included as a conductive material unless electrically conductive material causes a chemical change in the battery. Examples of the conductive material may be or include a carbon-based material such as at least one of natural graphite, artificial graphite, carbon black, acetylene black, ketjen black, a carbon fiber, a carbon nanofiber, a carbon nanotube, and the like; a metal-based material such as or including at least one of copper, nickel, aluminum silver, and the like in a form of a metal powder or a metal fiber; a conductive polymer such as a polyphenylene derivative; or a mixture thereof.

The negative electrode current collector may include at least one of a copper foil, a nickel foil, a stainless steel foil, a titanium foil, a nickel foam, a copper foam, a polymer substrate coated with a conductive metal, and a combination thereof, but is not limited thereto, and the current collector according some example embodiments may be used. In the latter case, the first electrically conductive layer and the second electrically conductive layer may include copper (Cu).

Electrolyte

An electrolyte for a rechargeable lithium battery may be or include, for example, an electrolyte solution, which includes a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, alcohol-based solvent, aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate. (EC), propylene carbonate (PC), butylene carbonate (BC), etc. The ester-based solvent may include at least one of methyl acetate, ethyl acetate, n-propyl acetate, dimethylacetate, methylpropionate, ethylpropionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. The ketone-based solvent may include cyclohexanone. The alcohol-based solvent may include at least one of ethyl alcohol, isopropyl alcohol, and the like, and the aprotic solvent may include at least one of nitriles such as R-CN (wherein R is a C2 to C20 linear, branched, or cyclic hydrocarbon group, and may include a double bond, an aromatic ring, or an ether group), amides such as dimethylformamide, dioxolanes such as 1,3-dioxolane or 1,4-dioxolane, sulfolanes, and the like.

The non-aqueous organic solvent may be included alone or in a combination of two or more solvents.

For example, when using a carbonate-based solvent, cyclic carbonate and chain carbonate can be mixed, and cyclic carbonate and chain carbonate may be mixed at a volume ratio in a range of about 1:1 to about 1:9.

The lithium salt dissolved in the organic solvent is configured to supply lithium ions in a battery, to enable a basic operation of a rechargeable lithium battery, and to improve transportation of the lithium ions between positive and negative electrodes. Examples of a lithium salt may include one or more of $LiPF_6$, $LiBF_4$, $LiSbF_6$, $LiAsF_6$, $LiClO_4$, $LiAlO_2$, $LiAlCl_4$, $LiPO_2F_2$, LiCl, Lil, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (x and y are integers from 1 to 20), lithium trifluoromethane sulfonate, lithium tetrafluoroethanesulfonate, lithium difluorobis(oxalato)phosphate, (LiDFBOP), and lithium bis(oxalato)borate (LiBOB).

Separator

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be or include a polymer film formed of or including any one or more of a polymer, or a copolymer or mixture of two or more of polyolefin such as polyethylene or polypropylene, a polyester such as polyethyleneterephthalate, or polybutyleneterephthalate, polyacetal, polyamide, polyimide, polycarbonate, polyether ketone, polyaryl ether ketone, polyether imide, polyamideimide, polybenzimidazole, polyether sulfone, polyphenyleneoxide, a cyclic olefin copolymer, polyphenylenesulfide, polyethylenenaphthalate, a glass fiber, tetrafluoroethylene, and polytetrafluoroethylene (for example, TEFLON®).

The organic material may include a polyvinylidene fluoride-based polymer or a (meth)acrylic polymer.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

Rechargeable Lithium Battery

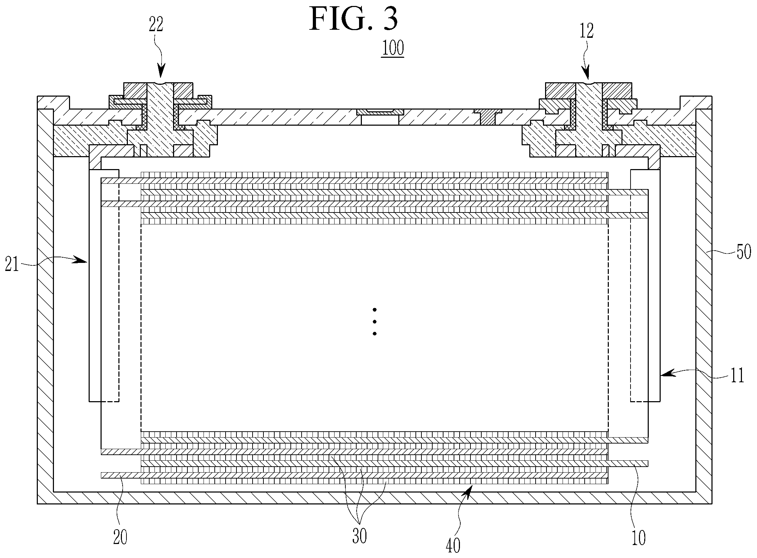

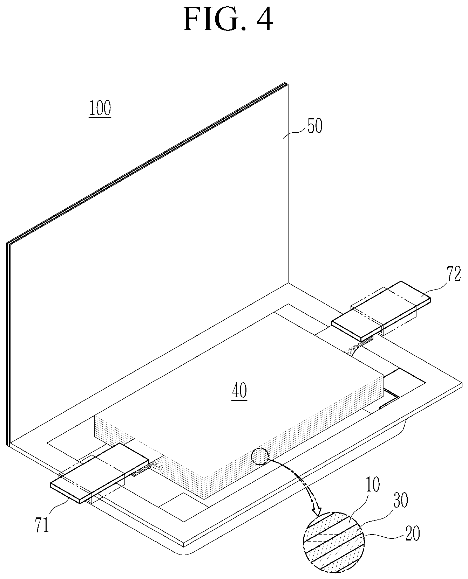

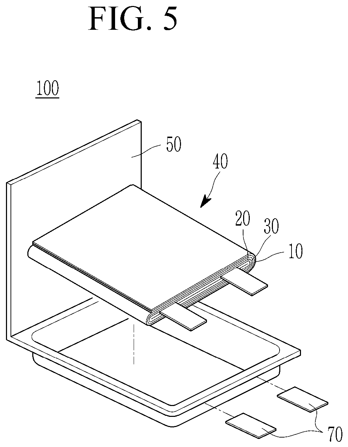

The rechargeable lithium battery may be classified into cylindrical, prismatic, pouch, or coin-type batteries, and the like depending on their shape. FIGS. 2 to 5 are schematic views illustrating a rechargeable lithium battery according to some example embodiments. FIG. 2 illustrates a cylindrical battery, FIG. 3 illustrates a prismatic battery, and FIGS. 4 and 5 illustrate pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 sealing the case 50 as shown in FIG. 2. In addition, in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 includes an electrode tab 70 illustrated in FIG. 5, or a positive electrode tab 71 and a negative electrode tab 72 illustrated in FIG. 4, the electrode tabs 70/71/72 forming an electrical path for inducing the current formed in the electrode assembly 40 to the outside of the rechargeable lithium battery 100.

The rechargeable lithium battery according to some example embodiments may be applicable to automobiles, mobile phones, and/or various types of electrical devices, but the present disclosure is not limited thereto.

Hereinafter, examples of the present disclosure and comparative examples are described. These examples, however, are not in any sense to be interpreted as limiting the scope of the disclosure.

**Example 1**

(1) Manufacturing of positive electrode current collector

Polyethylene terephthalate (PET) with intrinsic viscosity of 0.50 dL/g was used as a polymer, a unidirectionally-aligned glass fiber was used as a reinforcing fiber, and the polymer and the reinforcing fiber were mixed in a weight ratio of 50:50. Herein, the reinforcing fiber had elongation of 5% based on 100% of elongation of the polymer elongation and a weight per square meter of 10 g/m$^2$.

The reinforcing fiber was subjected to a plasma treatment or a corona discharge treatment under a nitrogen atmosphere to improve miscibility with polyethylene terephthalate (PET), and dissolved in dimethyl sulfoxide (DMSO) to obtain a PET solution, which was formed into a film in a hot melt coating method.

As a result of examining a cross-section of the reinforcing fiber with a scanning electron microscope (SEM), the reinforcing fibers were arranged in a machine direction (MD) in a polymer reinforcing layer, and the fiber-reinforced layer had a thickness of about 5 $\mu$m.

Hereinafter, in order to improve adherence between each first and second electrically conductive layer to be described below and the polymer in the fiber-reinforced layer, the fiber-reinforced layer was plasma-treated under a nitrogen atmosphere.

Under a vacuum atmosphere reduced to 10$^{-5}$ Torr to 10$^{-6}$ Torr, an electric field was applied to an aluminum filament to gasify it, an aluminum layer (each thickness: 0.8 $\mu$m) was deposited on one surface and the other surface of the fiber-reinforced layer. The aluminum layer deposited on one surface of the fiber-reinforced layer was called to be a first electrically conductive layer, and the aluminum layer deposited on the other surface of the fiber-reinforced layer was called to be a second electrically conductive layer.

During the electric field, while the fiber-reinforced layer was rotated in the MD direction, until the first electrically conductive layer and the second electrically conductive layer respectively reached a target thickness, the first and second electrically conductive layers were deposited at a speed of 3 to 4 Angstroms/s.

On the other hand, in the fiber-reinforced layer, pin holes were inevitably formed. Accordingly, in order to short-circuit the electrical connection between the first electrically conductive layer and the second electrically conductive layer through the pinholes, the electric field was applied between the two different electrically conductive layers. In addition, the electric field was applied to any two points in the same electrically conductive layer to strength connection between deposition metal particles respectively constituting the first electrically conductive layer and the second electrically conductive layer, thereby improving reliability of the electrically conductive layers.

(2) Manufacturing of Positive Electrode

LiNi$_{0.75}$Mn$_{0.23}$Al$_{0.02}$O$_2$ as a positive electrode active material, polyvinylidene fluoride as a binder, and acetylene black as a conductive material were mixed in a weight ratio of 96:3:1, and dispersed in N-methyl pyrrolidone to prepare a positive electrode active material slurry.

The positive electrode active material slurry was coated on the positive electrode current collector and then, dried at 110 °C and pressed to manufacture a positive electrode.

(3) Manufacturing of Negative Electrode

A negative electrode active material was prepared by mixing artificial graphite and silicon particles in a weight ratio of 93.5:6.5, and the negative electrode active material : a styrene-butadiene rubber binder : carboxylmethyl cellulose were mixed in a weight ratio of 97:1:2 and then, dispersed in distilled water to prepare a negative electrode active material slurry.

The negative electrode active material slurry was coated on a 10 $\mu$m-thick Cu foil and then, dried at 100 °C and pressed to manufacture a negative electrode.

(4) Preparation of Electrolyte Solution

An electrolyte solution was prepared by mixing ethylene carbonate (EC) : ethylmethyl carbonate (EMC) : dimethyl carbonate (DMC) in a volume ratio of 20:40:40 to prepare a carbonate-based solvent and dissolving 1.5 M of lithium salt (LiPF$_6$) in the carbonate-based solvent.

(5) Manufacturing of Rechargeable Lithium Battery Cell

The positive and negative electrodes were assembled with a 25 $\mu$m-thick polyethylene separator to manufacture an electrode assembly, the electrode assembly was housed in a prismatic case, and the electrolyte solution was injected thereinto, manufacture a rechargeable lithium battery cell.

### Example 2

A positive electrode current collector, a positive electrode, and a rechargeable lithium battery cell according to Example 2 were manufactured in the same manner as in Example 1, with a difference that expansion-type graphite was further used as a foaming agent in manufacturing the positive electrode current collector of Example 1, and the polymer, the reinforcing fiber, and the foaming agent were mixed in a weight ratio of 48:50:2.

### Example 3

A positive electrode current collector, a positive electrode, and a rechargeable lithium battery cell according to Example 3 were manufactured in the same manner as in Example 1, with a difference that carbon fiber instead of the glass fiber was used as the reinforcing fiber in manufacturing the positive electrode current collector of Example 1.
The reinforcing fiber had elongation of 5% based on 100% of that of the polymer and a weight per square meter of 8 $g/m^2$.

### Example 4

A positive electrode current collector, a positive electrode, and a rechargeable lithium battery cell according to Example 4 were manufactured in the same manner as in Example 1, with a difference that the reinforcing fibers were arranged at an angle of 90 ° with the MD direction in manufacturing the positive electrode current collector of Example 1.

### Example 5

A positive electrode current collector, a positive electrode, and a rechargeable lithium battery cell according to Example 5 were manufactured in the same manner as in Example 1, with a difference that the polymer and the reinforcing fiber were mixed in a weight ratio of 30:70 in manufacturing the positive electrode current collector of Example 1.

### Example 6

In manufacturing the positive electrode current collector of Example 1, instead of the fiber-reinforced layer in which the reinforcing fibers were immersed in the polymer, a PET film was formed to have a thickness of 2 μm in a dimethyl sulfoxide (DMSO) solvent.
Subsequently, the PET film was laminated with the same glass fiber prepreg as the reinforcing fiber of Example 1 through high-temperature laminating, manufacturing a bilayer fiber-reinforced layer including the PET film (a layer including the polymer) and the reinforcing fiber. Except for the above, a positive electrode and a rechargeable lithium battery cell according to Example 6 were manufactured in the same manner as in Example 1.

### Comparative Example 1

A 14 μm-thick Al foil itself was used as a positive electrode current collector.
Except for the above, a positive electrode and a rechargeable lithium battery cell of Comparative Example 1 were manufactured in the same manner as in Example 1.
Comparative Example 1 may correspond to the Conventional Current Collector 1 discussed above.

### Comparative Example 2

A positive electrode and a rechargeable lithium battery cell according to Comparative Example 2 were manufactured in the same manner as in Example 1, with a difference that the reinforcing fiber was not used in manufacturing the positive electrode current collector of Example 1.
Comparative Example 2 may correspond to the Conventional Current Collector 2 discussed above.

### Comparative Example 3

A positive electrode and a rechargeable lithium battery cell according to Comparative Example 3 were manufactured in the same manner as in Example 2, with a difference that the reinforcing fiber was not used in manufacturing the positive electrode current collector of Example 2.
For reference, sheet resistances of the positive electrode current collectors according to Examples 1 to 6 and Comparative Examples 1 to 3 were summarized in Table 1 below.

The sheet resistance of the positive electrode current collectors was measured by using a 4-point probe device, which is generally used for measuring sheet resistance of a bulk thin film.

Table 1:

|  | Sheet resistance (mΩ/sq) |
|---|---|
| Example 1 | 12.9 |
| Example 2 | 12.8 |
| Example 3 | 8.2 |
| Example 4 | 12.8 |
| Example 5 | 12.7 |
| Example 6 | 12.7 |
| Comparative Example 1 | 2.0 |
| Comparative Example 2 | 12.6 |
| Comparative Example 3 | 12.5 |

**Evaluation Example 1: Evaluation of Positive Electrode Current Collector**

The positive electrode current collectors of Examples 1 to 6 and Comparative Examples 1 to 3 were evaluated with respect to characteristics in the following methods, and the results are shown in Table 2 below.

(1) Elongation

The elongation was measured according to a standard test method ASTM D882 by using UTM 6800 equipment made by Instron.

(2) Puncture Strength

The puncture strength was measured according to a standard test method ASTM F1306 by using UTM 6800 equipment made of Instron.

**Evaluation Example 2: Evaluation of Rechargeable Lithium Battery Cell**

The rechargeable lithium battery cells of Examples 1 to 6 and Comparative Examples 1 to 3 were evaluated with respect to cycle-life characteristics in the following method, and the results are shown in Table 2 below.

The rechargeable lithium battery cells were 200 cycles charged and discharged under the condition of 0.33 C charge (CC/CV, 4.45 V, 0.025 C Cut-off) / 1.0 C discharge (CC, 2.5 V Cut-off) and 25 °C to calculate a capacity retention rate according to Equation 1.

Capacity retention rate %: = (Discharge capacity after 200 cycles / Discharge capacity after 1st cycle) * 100

Equation 1:

Table 2:

|  | Evaluation of positive electrode current collector | | Evaluation of rechargeable lithium battery cell |
|---|---|---|---|
|  | Elongation %: | Puncture strength $g_f$: | capacity retention rate %: @200 cyc. |
| Example 1 | 5.2 | 1262 | 97 |
| Example 2 | 5.5 | 1153 | 96 |
| Example 3 | 6.2 | 1652 | 98 |
| Example 4 | 1.2 | 2650 | 96 |

(continued)

| | Evaluation of positive electrode current collector | | Evaluation of rechargeable lithium battery cell |
|---|---|---|---|
| | Elongation %: | Puncture strength $g_f$: | capacity retention rate %: @200 cyc. |
| Example 5 | 2.2 | 1466 | 94 |
| Example 6 | 5.6 | 895 | 95 |
| Comparative Example 1 | 0.3 | 206 | 98 |
| Comparative Example 2 | 7.1 | 667 | 96 |
| Comparative Example 3 | 7.2 | 655 | 96 |

Referring to Table 2, the current collector according to some example embodiments, which was represented by Examples 1 to 6, exhibits large elongation by inserting a fiber-reinforced layer including a reinforcing fiber and a polymer between two different electrically conductive layers (e.g., the first electrically conductive layer and the second electrically conductive layer), compared to Conventional Current Collector 1 including no polymer layer, thereby reducing or suppressing electrical short-circuit, thermal runaway, and/or explosion of the rechargeable lithium battery cells, when mechanically deformed by physical and/or chemical factors.

In addition, the current collector according to some example embodiments, which was represented by Examples 1 to 6, was able to provide tensile resistance for resisting the tensile force applied during a process by inserting a fiber-reinforced layer including a reinforcing fiber and a polymer between two different electrically conductive layers, compared to Conventional Current Collector 2 including a polymer layer, thereby improving product reliability, a yield, and a process speed.

In addition, the current collector according to some example embodiments, which was represented by Examples 1 to 6, improved anisotropy mechanical properties, compared to Comparative Example 3, which may be a response technology for controlling pinholes and improving a process speed due to thin-filming in the future, as current collector material technology advances.

As in Examples 1 to 5, types, structures, and contents of reinforcing fibers in the fiber-reinforced layer may be adjusted to control anisotropy mechanical properties (elongation, tensile strength) and capacity retention rate, and in addition, a structure of the fiber-reinforced layer may be changed to a monolayer as in the fiber-reinforced layers of Examples 1 to 5, or a bilayer as in the fiber-reinforced layer of Example 6, as needed. Accordingly, fiber-reinforced composite substrates may be customized depending on target properties of a current collector and a rechargeable lithium battery.

Herein, for convenience, the current collector was manufactured as a positive electrode current collector, but even when manufactured as a negative electrode current collector, the same desired or improved performance as in Examples 1 to 6 may be achieved.

Accordingly, the current collector according to some example embodiments, when applied to at least one electrode of the positive and negative electrodes, may enable safe operation of the rechargeable lithium batteries. These effects of the current collector according to some example embodiments, even when energy density of the rechargeable lithium batteries is increased, may be still effective.

While this disclosure has been described in connection with what is presently considered to be practical example embodiments, it is to be understood that the disclosure is not limited to the disclosed example embodiments, but, on the contrary, is intended to cover various modifications and equivalent arrangements included within the spirit and scope of the appended claims.

**Description of Symbols:**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

**Claims**

1. A current collector for a rechargeable lithium battery (100), the current collector comprising

   a first electrically conductive layer;
   a second electrically conductive layer; and
   a fiber-reinforcing layer located between the first electrically conductive layer and the second electrically conductive layer, the fiber-reinforcing layer including a reinforcing fiber and a polymer.

2. The current collector as claimed in claim 1, wherein the reinforcing fiber has an elongation that is less than about 100% compared to 100% elongation of the polymer.

3. The current collector as claimed in claim 1 or 2, wherein the reinforcing fiber comprises at least one of an organic fiber, an inorganic fiber, and a mixture thereof.

4. The current collector as claimed in any of the claims 1 to 3, wherein the organic fiber comprises at least one of a polyester fiber, a polyamide fiber, an amide fiber, a polyarylate fiber, a polyethylene fiber, a polyacrylonitrile fiber, a polyimide fiber, a polybutylene terephthalate fiber, a polyethylene naphthalate fiber, a polyacetal fiber, a PBO fiber, a polyphenylene sulfide fiber, and a poly ketone fiber.

5. The current collector as claimed in any of the claims 1 to 4, wherein the inorganic fiber comprises at least one of a glass fiber, a carbon fiber, a ceramic fiber, and a metal fiber.

6. The current collector as claimed in any of the claims 1 to 5, wherein the reinforcing fiber is arranged at least one of unidirectionally, woven, and randomly within the fiber-reinforced layer.

7. The current collector as claimed in any of the claims 1 to 6, wherein a content of the reinforcing fiber is in a range of about 0.2 wt% to about 98 wt% based on 100 wt% of the fiber-reinforced layer.

8. The current collector as claimed in any of the claims 1 to 7, wherein the polymer comprises at least one of a thermoplastic resin and a thermosetting resin, whereby preferably the thermoplastic resin comprises at least one of polypropylene (PP), polyethylene (PE), polyethylene terephthalate (PET), polyvinyl chloride (PVC), polystyrene (PS), acrylonitrile butadiene styrene (ABS), polymethyl methacrylate (PMMA), polyvinyl alcohol (PVA), polyvinylidene-chloride (PVDC), polyamide (PA), polyoxymethylene (POM), polycarbonate (PC), polyphenylene ether (PPE), polybutylene terephthalate (PBT), polysulfone (PSU), polyethersulfone (PES), polyphenylene sulfide (PPS), polyethylenimine (PEI), a combination thereof, and a combination of monomers thereof and/or the thermosetting resin comprises at least one of polyurethane (PU), epoxy, phenolic, polyimide, unsaturated polyester, vinyl polyester, a combination thereof, and a combination of monomers thereof

9. The current collector as claimed in any of the claims 1 to 8, wherein the fiber-reinforced layer further comprises a functional material including at least one of a foaming agent, a flame retardant, and a fire extinguishing agent.

10. The current collector as claimed in any of the claims 1 to 9, wherein the functional material is included in an amount in a range of about 0.1 wt% to about 25 wt% based on 100 wt% of the fiber-reinforced layer.

11. The current collector as claimed in any of the claims 1 to 10, wherein the first electrically conductive layer and the second electrically conductive layer each independently comprise an electrically conductive layer including at least one of aluminum (Al), nickel (Ni), copper (Cu), iron (Fe), silver (Ag), gold (Au), tungsten (W), zinc (Zn), platinum (Pt), and tin (Sn),; or a carbon layer including carbon (C).

12. The current collector as claimed in any of the claims 1 to 11, wherein a thickness ratio of the first electrically conductive layer to the second electrically conductive layer is in a range of about 3:7 to about 7:3.

13. The current collector as claimed in any of the claims 1 to 12, wherein one of:

   the current collector further comprises an adhesive layer between the first electrically conductive layer and the fiber-reinforced layer;
   the current collector further comprises an adhesive layer between the second electrically conductive layer and the fiber-reinforced layer; and
the current collector further comprises an adhesive layer between the first electrically conductive layer and the fiber-reinforced layer and between the second electrically conductive layer and the fiber-reinforced layer.

14. An electrode comprising the current collector as claimed in any of the claims 1 to 13.

15. A rechargeable lithium battery (100), comprising:

a positive electrode (10) including a positive electrode current collector;
a negative electrode (20) including a negative electrode current collector; and
an electrolyte between the positive electrode (10) and the negative electrode (20),
wherein at least one of the positive electrode current collector and the negative electrode current collector includes the current collector as claimed in any of the claims 1 to 13.

# FIG. 1

second electrically conductive layer

Polymer Layer

first electrically conductive layer

Puncher
Tip

e⁻ Electronic
Conductivity Blocking

Heat Shrink

Puncher
Tip

# FIG. 2

# FIG. 3

<u>100</u>

EP 4 675 704 A2

# FIG. 4

# FIG. 5